# EUROPÄISCHE PATENTSCHRIFT

(11) **EP 3 201 158 B1**
(45) Veröffentlichungstag und Bekanntmachung des Hinweises auf die Patenterteilung: **08.01.2020**
(21) Anmeldenummer: 15795107.0
(22) Anmeldetag: 30.09.2015
(51) Int. Cl.: C05D 1/02, C05G 3/00, C01D 5/00, C05D 1/00

(54) **VERFAHREN ZUR HERSTELLUNG VON KALIUMSULFAT-GRANULATEN UND DAS HIERAUS ERHALTENE KALIUMSULFAT-GRANULAT SOWIE DESSEN VERWENDUNG**
METHOD FOR THE PRODUCTION OF SULPHATE OF POTASH GRANULATES, SULPHATE OF POTASH GRANULATE OBTAINED THEREBY, AND USE THEREOF
PROCÉDÉ DE FABRICATION DE GRANULATS DE SULFATE DE POTASSIUM ET GRANULAT DE SULFATE DE POTASSIUM OBTENU D'APRÈS LEDIT PROCÉDÉ AINSI QUE SON UTILISATION

(30) Priorität: 30.09.2014 DE 102014014099
(43) Veröffentlichungstag der Anmeldung: 09.08.2017
(73) Patentinhaber: K+S Minerals and Agriculture GmbH, 34131 Kassel (DE)
(72) Erfinder: BAUCKE, Guido, 36277 Schenklengsfeld OT Wippershain (DE); MÜLLER-GOLDKUHLE, Marcel, 45138 Essen (DE); DIETRICH, Armin, 67299 Weißenborn (DE); REST, Torsten, 36266 Heringen (DE); KEIDEL, Roland, 36100 Petersberg-Steinau (DE); WALDMANN, Ludger, 48291 Telgte (DE)
(74) Vertreter: Dressel, Stefan
(86) Internationale Anmeldenummer: PCT/DE2015/000476
(87) Internationale Veröffentlichungsnummer: WO 2016/050232

(56) Entgegenhaltungen:
- EP-A1- 0 488 199
- EP-A2- 1 219 581
- DE-A1- 2 810 640
- DE-C1- 4 232 567
- US-A1- 2003 135 957
- DATABASE WPI Week 199043 Thomson Scientific, London, GB; AN 1990-320673 XP002758669, & CN 1 039 012 A (LI XINZHONG) 24. Januar 1990 (1990-01-24)

## Beschreibung

Die vorliegende Erfindung betrifft ein Verfahren zur Herstellung von Kaliumsulfat-Granulaten und das hieraus erhaltene Kaliumsulfat-Granulat sowie dessen Verwendung.

Kaliumsulfat auch bezeichnet als SOP (sulphate of potash) kommt in der Natur nur gelegentlich in reiner Form (als Arcanit) vor. Kaliumsulfat ist aber in Form von sogenannten Doppelsalzen in verschiedenen Mineralien, wie beispielsweise Schönit, Leonit, Langbeinit, Polyhalit und Glaserit enthalten. Industriell kann Kaliumsulfat beispielsweise mit dem Mannheim-Verfahren, oder aus Kaliumchlorid und Kieserit hergestellt werden, siehe hierzu auch Winnacker, Küchler, WILEY VCH Verlag, Band 8, 2005, S. 91f. In der Landwirtschaft findet Kaliumsulfat Verwendung als Bestandteil von sogenannten Kalidüngern. Kaliumsulfat kombiniert die wesentlichen Nährstoffe Kalium und Sulfat in einer optimalen Form miteinander, welche gut wasserlöslich sind und somit nach Ausbringen in der Form von Dünger für die Pflanze schnell verfügbar sind und von dieser direkt aufgenommen werden können.

Mineraldünger werden häufig als Granulat eingesetzt, da sie in dieser Form vorteilhafte Handhabungseigenschaften aufweisen. So neigen Granulate im Vergleich zu den entsprechenden feinzerteilten, pulverförmigen Mineraldüngern in sehr viel geringerem Maße zu Staubbildung, sind lagerstabiler, hygroskopisch beständiger und lassen sich leichter und gleichmäßiger durch Streuen ausbringen und dosieren. Zudem sind auf Freiflächen aufgetragene Granulate auch weniger anfällig gegen Windverwehungen.

Unter Granulierung wird eine Zusammenführung von Pulver- oder Feinpartikeln zu größeren Partikeleinheiten, sogenannten Granulaten, verstanden. Insbesondere werden darunter Verfahren zur Press- und Aufbauagglomeration sowie verwandte Verfahren verstanden, bei denen disperse feste Primärteilchen unter Kornvergrößerung zusammengelagert werden. Granulierungen werden häufig in Gegenwart von Bindemitteln vorgenommen. Dabei handelt es sich um flüssige oder feste Stoffe, deren Haftkräfte einen Zusammenhalt zwischen den Partikeln erzeugen. Die Verwendung solcher Bindemittel ist erforderlich, falls die Granulierung der Partikel ohne diese zu keinem ausreichend stabilen Granulat führt. Bekannte Bindemittel sind z.B. Wasser, Gelatine, Stärke, Ligninsulfonate, Kalkhydrate und Melasse. Die Wahl des Bindemittels kann die Eigenschaften der Agglomerate, insbesondere ihre mechanische Festigkeit (z.B. Abrieb, Bruch- oder Berstfeste), hygroskopische Beständigkeit und Staubneigung, maßgeblich beeinflussen.

Eine Granulierung kann beispielsweise mittels einer Walzenpresse erfolgen. Bei dieser Art der Pressagglomeration oder auch Pressgranulierung genannt werden die Pulver- oder Feinpartikel zwischen zwei gegenläufigen Walzen, die in einer Rahmenkonstruktion verspannt sind, verdichtet bzw. kompaktiert. Häufig ist hierbei eine der Walzen als Fest- und die andere als Loswalze ausgeführt. Diese Loswalze wird in der Regel durch eine hydraulische Anpressvorrichtung derart abgestützt, dass die während des Pressvorgangs applizierte Kraft exakt eingestellt werden kann. Die dabei verwendete Gesamtpresskraft wird häufig auch zur Arbeitsbreite der Walzen ins Verhältnis gesetzt und als Spezifische Presskraft oder Linienkraft in z.B. N/cm angegeben.

Als Dosiereinheit, um das zu kompaktierende Gut gezielt in den Walzenspalt zu fördern, werden Schwerkraft- oder Schneckenzuteiler verwendet.

Das zu kompaktierende Gut wird zu Schülpen verpresst. Um Granalien einer definierten Korngröße zu erhalten, folgt nach dem Kompaktiervorgang eine Zerkleinerung der Schülpen mittels Mühlen. In der nachfolgenden Klassierung wird Fein- und Überkorn abgetrennt und so das gewünschte Korngrößenspektrum erhalten.

Aus dem Stand der Technik sind Verfahren zur Granulierung von Kaliumsulfat-Pulver/ Feinpartikel bekannt.

Die DE 2810640 C2 beschreibt ein Granulierverfahren, bei dem die Temperatur eines feinkörnigen, Kalium- oder Ammoniumsalze enthaltenden Materials vor dem Pressen auf 40 bis 50°C eingestellt und das Material anschließend verpresst wird. Die mit diesem Granulierverfahren erzielten mechanischen Festigkeiten sind noch verbesserungswürdig.

Die WO 2007/071175 beschreibt ein Verfahren zur Herstellung von granuliertem Kaliumsulfat mit Maisstärke als Bindemittel.

Ein Verfahren und eine Versuchsanlage zur Granulierung von Kaliumsulfat ist aus "Die Granulierung von Kaliumsulfat", A. Hollstein, Kali u. Steinsalz, Bd. 7 (1979) Heft 12, bekannt. Die Zugabe von Wasser und/oder Dampf vor dem Pressspalt ist genannt. Die hergestellten Produkte weisen noch verbesserungswürdige Festigkeitseigenschaften auf.

Die DE4232567C1 beschreibt ein Verfahren zur Verhinderung einer Staubbildung beim Verladen oder Transportieren eines sulfatischen Düngergranulats. Hierzu wird eine hochprozentige Staubbindemittel-Lösung auf Düngemittelgranulate verschiedener Zusammensetzung aufgesprüht.

Weitere Verfahren zur Herstellung von Granulaten werden in US 2003/13595, EP 1219581, CN 1039012 und EP 0488199 offenbart.

Zur Verringerung der durch Abrieb bedingten Staubbildung werden im Stand der Technik mineralöl-, pflanzenöl-, glyzerin- oder polyethylenglykolhaltige Zusammensetzungen vorgeschlagen.,

Der Erfindung liegt die Aufgabe zu Grunde, ein Verfahren zur Granulierung von Kaliumsulfat bereitzustellen. Die mit diesem Verfahren hergestellten Granulate sollen über eine verbesserte mechanische Stabilität verfügen und sich insbesondere durch eine hohe Berstfestigkeit und einen geringen Abrieb auszeichnen.

### ZUSAMMENFASSUNG DER ERFINDUNG

Überraschenderweise wurde gefunden, dass die gestellte Aufgabe gelöst wird durch Granulieren einer im Wesentlichen aus feinem Kaliumsulfat und mindestens einem Natriumsalz bestehenden Mischung unter Zusatz von Wasser, wobei das Natriumsalz - ausgewählt aus Natriumchlorid, Natriumhydroxid, Natriumsulfat (und dessen Hydraten) und deren Mischungen - in einer Menge von 0,1 bis 7,5- Gewichts-%, vorzugsweise 1,8 bis 4,0%, besonders bevorzugt 2,5 bis 3,5%, gerechnet als Gewichtsanteil des eingesetzten Natriumsalzes jeweils bezogen auf das eingesetzte Kaliumsulfat eingesetzt wird und wobei das Natriumsalz in Form eines Staubs mit einer maximalen Partikelgröße von 200 um oder in Form einer wässrigen Lösung zugesetzt wird oder wobei ein Teil des Natriumsalzes in Form eines Staubs mit einer maximalen Partikelgröße von 200 um und die Restmenge des Natriumsalzes in Form einer wässrigen Lösung zugesetzt wird.

Zusätzlich können auch weitere Na-haltige Salze, wie z. B. D'Ansit (Na₂₁Mg[(Cl₃(SO₄)₁₀], Löweit (Na₁₂Mg₇(SO4)₁₃ x 15 H₂O), Glauberit (CaNa₂(SO₄)₂), Astrakanit (Na₂Mg(SO₄)₂ x 2H₂0) und/oder Rinneit (K₃Na(FeCl₆)) verwendet werden. Das erfindungsgemäße Verfahren liefert Kaliumsulfat-Granalien, die gegenüber mittels konventioneller Verfahren hergestellten Granalien u. a. schneller aushärten, d.h. die Reifezeit der Granalien wird verringert. Die so erhaltenen Granulate weisen gleichbleibende Partikelgrößenverteilungen und Dichten auf, besitzen die geforderten guten Stabilitätseigenschaften, insbesondere eine gute mechanische Stabilität wie Bruchstabilität und/oder geringen Abrieb und können überwiegend beschädigungsfrei gehandhabt und gemischt werden.

Gegenstand der Erfindung ist daher ein Verfahren zur Herstellung von Kaliumsulfat-Granulaten gemäß Anspruch 1.

Ein weiterer Gegenstand der Erfindung sind Kaliumsulfat-Granulate gemäß Anspruch 11.

Ein weiterer Gegenstand der Erfindung ist die Verwendung von Natriumsalzen, ausgewählt unter Natriumchlorid, Natriumhydroxid, Natriumsulfat und dessen Hydraten und deren Mischungen - zur Verbesserung der mechanischen Eigenschaften von Kaliumsulfat-Granulaten, insbesondere zur Erhöhung der Berstfestigkeit und/oder zur Erhöhung der Abriebfestigkeit gemäß Anspruch 12.

Ein weiterer Gegenstand der Erfindung ist die Verwendung von Glaserit als Bindemittel in Kaliumsulfat-Granulaten gemäß Anspruch 13.

### BESCHREIBUNG DER ERFINDUNG

Erfindungsgemäß sind sowohl das Natriumsalz als auch Wasser während des Granuliervorgangs zugegeben. Dies kann dadurch erreicht werden, dass das Natriumsalz mit dem zu granulierenden Kaliumsulfat vermischt und anschließend oder auch gleichzeitig mit Wasser und/oder Wasserdampf befeuchtet wird. Anstelle von Wasser kann auch eine wässrige Natriumsalzlösung verwendet werden.

Die Zugabe dieser Additive zum Kaliumsulfat kann in einem der Presse vorgeschalteten Mischer, einem Förderorgan und/oder im Aufgabeschacht bzw. der Zuteilvorrichtung der Walzenpresse erfolgen.

Weitere Versuche wurden mit Thenardit (Na₂SO₄), Mirabilit (Na₂SO₄ x 10 H₂O) und Natronlauge (NaOH in Form einer 50%igen wässrigen Lösung) durchgeführt.

Im Rahmen der vorliegenden Erfindung wird unter Nachbehandlung eine der Klassierung nachgeschaltete Zugabe von Wasser oder einer wässrigen Lösung auf das Granulat verstanden.

Die Durchführung der Granulierung innerhalb des erfindungsgemäßen Verfahrens kann in Analogie zu aus dem Stand der Technik bekannten Agglomerationsverfahren erfolgen, die beispielsweise in Wolfgang Pietsch, Agglomeration Processes, Wiley-VCH, 1. Auflage, 2002, sowie in G. Heinze, Handbuch der Agglomerationstechnik, Wiley-VCH, 2000, beschrieben sind, wie beispielsweise der Press- oder Aufbauagglomeration.

Vorzugsweise wird die Granulierung innerhalb des erfindungsgemäßen Verfahrens als Pressagglomeration durchgeführt.

Bei der Durchführung als Pressagglomeration erfolgt die Granulierung durch Verpressen der Kaliumsulfat und Natriumsalz enthaltenden Salzmischung in Gegenwart von Wasser und/oder Wasserdampf. Das Natriumsalz wird als Feststoff in Form eines Staubs mit einer maximalen Partikelgröße von 200 µm oder in Form einer wässrigen Lösung zugegeben oder ein Teil des Natriumsalzes wird in Form eines Staubs mit einer maximalen Partikelgröße von 200 µm und die Restmenge des Natriumsalzes in Form einer wässrigen Lösung zugesetzt.

Die Zugabe des Natriumsalzes sollte bevorzugt möglichst kurz vor dem Pressen erfolgen und das Natriumsalz sollte beim Pressvorgang bzw. bei der Aufbaugranulierung möglichst homogen verteilt sein.

Die hier und im Folgenden angegebenen Partikelgrößen können bis zu einer Partikelgröße im Bereich von größer 150 µm durch Siebanalyse und bei kleineren Partikelgrößen durch Laserbeugungsmethoden bestimmt werden.

In einer bevorzugten Ausführungsform der Erfindung besteht das für die Granulierung verwendete Kaliumsulfat zu mindestens 90 Gew.-% aus Partikeln, die einen Durchmesser kleiner als 2,0 mm und insbesondere kleiner als 1,0 mm haben. Vorzugsweise haben wenigstens 90 Gew.-% des Kaliumsulfats eine Partikelgröße im Bereich von 0,01 bis 2,0 mm und bevorzugt 0,02 bis 1,0 mm. Der d₅₀-Wert (Gewichtsmittel der Partikelgröße) der zur Granulierung eingesetzten Kaliumsulfatpartikel liegt in der Regel im Bereich von 0,05 bis 1,1 mm und insbesondere im Bereich von 0,1 bis 0,7 mm.

In der Regel weisen wenigstens 90 Gew.-% des partikulären Natriumsalzes in Form eines Staubs eine Partikelgröße von kleiner als 0,2 mm und insbesondere kleiner als 0,1 mm auf. Vorzugsweise liegt die Größe der Partikel von wenigstens 90 Gew.-% des partikulären Natriumsalzes im Bereich von 0,01 bis 0,2 mm und bevorzugt 0,02 bis 0,1 mm. Der d₅₀-Wert (Gewichtsmittel der Partikelgröße) der zur Granulierung eingesetzten Natriumsalzpartikel liegt in der Regel im Bereich von 0,01 bis 0,2 mm. Das Natriumsalz, wie z.B. NaCl, kann auch als Feststoff mit größerer Partikelgröße eingesetzt werden - die Partikelgröße muss nur so gewählt sein, dass eine gleichmäßige Verteilung im Granulat sichergestellt ist.

In einer Ausführungsform der Erfindung weist das Natriumsalz in Form eines Staubs eine Schüttgutdichte im Bereich von 250 bis 1300 kg/m³ auf.

Als Natriumsalz können alle Na-haltigen Salze, wie z. B. Natriumchlorid, Natriumhydroxid, Natriumsulfat (und dessen Hydrate, wie z.B. Mirabilit (Na₂SO₄ x 10 H₂O)) und deren Mischungen, in einer Menge von 0,1 bis 7,5- Gewichts-%, vorzugsweise 1,8 bis 4,0, besonders bevorzugt 2,5 bis 3,5%, gerechnet als Gewichtsanteil des eingesetzten Natriumsalzes jeweils bezogen auf das eingesetzte Kaliumsulfat, verwendet werden.

Zusätzlich können auch weitere Na-haltige Salze, wie z. B. D'Ansit (Na₂₁Mg[(Cl₃(SO₄)₁₀]), Löweit (Na₁₂Mg₇(SO₄)₁₃ x 15H₂O), Glauberit (CaNa₂(SO₄)₂), Astrakanit (Na₂Mg(SO₄)₂ x 2H₂0), Rinneit (K₃Na(FeCl₆)) verwendet werden.

In einer besonders bevorzugten Ausführungsform der Erfindung ist das Natriumsalz Natriumchlorid.

Sofern das Natriumsalz Natriumchlorid enthält, weisen die Natriumchlorid-Partikel vorzugsweise ebenfalls Partikelgrößen in dem für Natriumsalz genannten Bereich auf.

In einer bevorzugten Ausführungsform der Erfindung ist die Menge an zugesetztem Wasser vor oder während des Pressvorgangs im Bereich von 0,1 bis 2,5 Gew.-%, vorzugsweise im Bereich von 0,1 bis 1,5 Gew.-%, besonders bevorzugt im Bereich von 0,3 bis 1,2 Gew.-% und/oder nach dem Pressvorgang im Bereich von 0,1 bis 2,5 Gew.-%, vorzugsweise im Bereich von 0,1 bis 1,5 Gew.-%, besonders bevorzugt im Bereich von 0,1 bis 1,2 Gew.-%. Die gesamte Menge an zugesetztem Wasser beträgt maximal 3,5 Gew.-%, jeweils bezogen auf wasserfreies Kaliumsulfat.

Die Wasseraufgabe nach dem Pressvorgang ist optional.

Im Rahmen der Erfindung wird unter der spezifischen Linienkraft eine Kraft bezogen auf eine Längeneinheit verstanden. Die Linienkraft wirkt entlang einer gedachten Linie entlang der Presswalzenbreite. Die spezifische Linienkraft wurde bei Presswalzendurchmessern von 1000 mm und erzielten mittleren Schülpendicken von 10 mm ermittelt.

In einer bevorzugten Ausführungsform der Erfindung umfasst die Pressagglomeration ein Kompaktieren des Gemisches aus Kaliumsulfat, Natriumsalz und Wasser mit einer Walzenpresse bei einer spezifischen Linienkraft im Bereich von 30 bis 100 kN/cm, vorzugsweise im Bereich von 40 bis 80 kN/cm, besonders bevorzugt im Bereich von 45 bis 75 kN/cm, bezogen auf 1000 mm Walzendurchmesser und eine mittlere Schülpendicke von 10 mm.

In einer bevorzugten Ausführungsform der Erfindung wird die Pressagglomeration zur Kompaktierung des Gemischs aus Kaliumsulfat, Natriumsalz und Wasser mit einer Walzenpresse durchgeführt und umfasst eine anschließende Zerkleinerung und Klassierung der beim Kompaktieren erhaltenen Schülpen.

In einer weiteren Ausführungsform der Erfindung werden die Schülpen nach dem Pressvorgang, insbesondere nach und / oder während der Zerkleinerung und / oder der Klassierung mit Wasser befeuchtet. Dabei liegt die Menge an zugesetztem Wasser nach dem Pressvorgang bevorzugt im Bereich von 0,1 bis 2,5 Gew.-%, vorzugsweise im Bereich von 0,1 bis 1,5 Gew.-%, besonders bevorzugt im Bereich von 0,3 bis 1,2 Gew.-%. Die gesamte Menge an zugesetztem Wasser beträgt maximal 3,5 Gew.-%, jeweils bezogen auf wasserfreies Kaliumsulfat. Auch bei einer Nachbehandlung des bereits vorliegenden Granulates, z.B. auf einem Reifeband oder in einem Mischer, kann Wasser zugegeben werden.

Im Rahmen der vorliegenden Erfindung kann die Gesamtmenge an Wasser bei der Granulierung einmalig zugegeben werden, oder die Wasserzugabe kann auch in Teilmengen vor, während und/oder nach dem Pressvorgang durchgeführt werden. Unter "nach dem Pressvorgang" wird im Rahmen der vorliegenden Erfindung eine Wasserzugabe wie beispielsweise ein Besprühen der hergestellten und/oder vermahlenen Schülpe und/oder des abgesiebten Granulats verstanden. Unter "vor und/oder während des Pressvorgangs" wird ein oder werden mehrere oben genannte Zugabeorte (vorgeschalteter Mischer, Förderorgan und/oder Aufgabeschacht bzw. Zuteilvorrichtung der Walzenpresse) in dem erfindungsgemäßen Verfahren vor dem Fertigstellungsschritt als Granulat verstanden.

In einer bevorzugten Ausführungsform der Erfindung führt man die Granulierung bei einer Temperatur im Bereich von 20 bis 100 °C durch.

Weiterhin können das zur Granulierung eingesetzte Kaliumsulfat-Pulver und/oder die Natriumsalze geringe Mengen an weiteren Düngemittelbestandteilen wie beispielsweise Ammoniumsulfat, Ammoniumnitrat, Harnstoff, DAP (Diammoniumphosphat, (NH₄)₂HPO₄), Kieserit oder auch Mikronährstoffe enthalten. Der Anteil dieser weiteren Bestandteile wird in der Regel 10 Gew.-%, bezogen auf das Gesamtgewicht der Salzmischung, nicht überschreiten. Beispiele für Mikronährstoffe sind insbesondere bor-, zink- und manganhaltige Salze. Der Anteil dieser Mikronährstoffe wird in der Regel 5 Gew.-%, insbesondere 1 Gew.-%, bezogen auf das Gesamtgewicht der Salzmischung, nicht überschreiten.

Die mit dem erfindungsgemäßen Verfahren hergestellten Granulate zeichnen sich durch hohe mechanische Stabilität, geringere Staubbildungsrate und gute hygroskopische Beständigkeit aus.

Die zuvor im Zusammenhang mit dem erfindungsgemäßen Verfahren gemachten Angaben hinsichtlich bevorzugter Ausführungsformen treffen auch auf die erfindungsgemäßen Granulate und deren Verwendung z. B. als Düngemittel zu.

### BEISPIELE

Das erfindungsgemäße Verfahren, das erfindungsgemäße Kaliumsulfat-Granulat und die erfindungsgemäße Verwendung werden durch die nachfolgenden Beispiele näher erläutert. Die nachfolgende Tabelle 2 zeigt eine Übersicht der durchgeführten Versuche als Beispiele 1 bis 9 mit Art und Menge der verwendeten Komponenten. Unter Material ist als SOP (sulphate of potash) das Kaliumsulfat mit der jeweiligen Spezifikation angegeben. Als Kaliumsulfat-Pulver kamen zwei SOP-Feinprodukte der Firma K+S Kali GmbH mit unterschiedlichen Spezifikationen zum Einsatz:

### SOP-Feinprodukt 1:

Kaliumsulfat (K₂SO₄): 95,5 Gew.-%
Andere Sulfate (MgSO₄, CaSO₄): 2,6 Gew.-%
Andere Bestandteile, vorwiegend Kristallwasser: 0,9 Gew.-%
Feuchte: 0,2 Gew.-%
Korngrößenverteilung: größer 0,85 mm 1 Gew.-%; 0,5-0,85 mm 3%; 0,25-0,5 mm 12%; 0,15-0,25 mm 22%; 0,09-0,15 mm 29%; kleiner 0,09 mm 33%;
SGN: 12 (size-guide-number)

### SOP-Feinprodukt 2:

Kaliumsulfat (K₂SO₄): 93 Gew.-%
Andere Sulfate (MgSO₄, CaSO₄): 4,1 Gew.-%
Andere Bestandteile, vorwiegend Kristallwasser: 1,0 Gew.-%
Feuchte: 0,2 Gew.-%
Korngrößenverteilung: größer 0,85 mm 2 Gew.-%; 0,5-0,85 mm 3%; 0,25-0,5 mm 12%; 0,15-0,25 mm 25%; 0,09-0,15 mm 31%; kleiner 0,09 mm 27%;
SGN: 13

Rechnerisch ergibt sich maximal ein Wasseranteil von rund 2,0 Gew.-% im erhaltenen Granulat. Zur Bestimmung des Glühverlust wurde die Substanz mit Bleioxid abgedeckt, bei 450-600 °C im Muffelofen geglüht und der Gewichtsverlust gravimetrisch ermittelt.

Der Trocknungsverlust (bei 105°C) wurde durch die Bestimmung des Trockenrückstandes und des Wassergehaltes nach DIN EN 12880 ermittelt.

Zur Durchführung der Pressagglomeration in Form einer Walzenkompaktierung wurde in den Beispielen 1 bis 9 das Kaliumsulfat-Pulver (SOP-Feinprodukte) und die gegebenenfalls Natriumsalz enthaltende Salzmischung in die Kompaktierungszone zwischen die Walzen befördert und das Pulver/die Feinpartikel zwischen den zwei sich gegenläufig drehenden Walzen mit einer bestimmten Kraft zu Schülpen gepresst. Anschließend wurde eine Zerkleinerung und Klassierung der beim Kompaktieren erhaltenen Schülpen durchgeführt.

Die Walzenpresse hatte die folgenden Eigenschaften und eingestellten Parameter:
Zuführung: Schneckenzuteiler
Walzendurchmesser: 800 mm
Arbeitsbreite der Presswalzen: 180 mm
Antriebsleistung der Walzenpresse: bis 160 kW
spezifischen Linienkraft zwischen den Walzen: bis zu 100 kN/cm
Walzenumfangsgeschwindigkeit: 0,13 bis 0,84 m/s
Walzenmaterial/Walzenbezug: Segmente mit Waffelung

Die Zerkleinerungseinheit war eine Prallmühle der Firma Hazemag mit einem Rotordurchmesser von 460 mm und war mit 2 Schlagleisten mit einer Schlagleistenbreite von 340 mm und 2 Prallplatten ausgestattet.

Als Klassiereinheit wurden zwei Schwingsiebmaschinen der Firma Rhewum genutzt.

Eine Absiebung ergab folgende beispielhafte in der Tabelle 1 dargestellte Kornbandverteilung des erfindungsgemäßen Granulates.

**Tabelle 1: Kornbandverteilung des hergestellten Kaliumsulfat-Granulates**

| Kornklasse | Rückstandsumme / Gew.-% |
|---|---|
| > 5,0 mm | 0 |
| > 4,0 mm | 0,4 |
| > 3,15 mm | 32,6 |
| > 2,5 mm | 81,5 |
| > 2,0 mm | 96,7 |
| > 0 mm | 100 |

Laut Röntgenpulverdiffraktometrie ist Hauptbestandteil des Produkts eine "Arcanit (K₂SO₄)-Phase". Als Nebenbestandteil findet man eine Aphthitalit-Phase (Kalium-Natrium-Sulfat, K₃Na(SO₄)₂, oder auch Glaserit genannt). Es wird vermutet, dass die Bildung der Glaseritphase an den Korngrenzen zu einer besseren und dauerhaften Verbindung der verpressten Partikel des Kaliumsulfats führt und damit die geringeren Abriebswerte und höheren Berstfesten verursacht bzw. mit verursacht.
Gegenstand der Erfindung ist daher auch die Verwendung von Glaserit als Bindemittel in Kaliumsulfat-Granulaten, insbesondere zur Verbesserung der mechanischen Eigenschaften des Granulates.

Da die Glaseritbildung als Umkristallisation auch bei Raumtemperatur möglich ist, kann auch bei einer Aufbaugranulierung auf z.B. einem Granulierteller eine Verbesserung der Berst- und Abriebswerte erwartet werden, sofern Natriumsalze in fester bzw. flüssiger Form homogen verteilt gemeinsam mit Wasser/Wasserdampf vorhanden sind. Im Falle einer Aufbaugranulierung z.B. im Wirbelschichtbett kann diese natürlich auch bei den oben genannten höheren Temperaturen durchgeführt werden.

In der Tabelle 2 sind die Ergebnisse für Abrieb und Berstfeste angegeben. Die Beimischungen zu den SOP-Feinprodukten sind unter "Zugabe" aufgeführt.
Bei den hergestellten Granulaten wurden Bruchfestigkeit, Abrieb und Restfeuchte nach folgenden Methoden bestimmt:

Die mittleren Bruchfestigkeiten wurden mit Hilfe des Tabletten-Bruchfestigkeitstesters Typ TBH 425D der Firma ERWEKA auf Basis von Messungen an 56 Einzelagglomeraten der Partikelgröße 2,5 bis 3,15 mm ermittelt.

Die Werte für den Abrieb wurden mit dem Rolltrommelverfahren nach Busch bestimmt. Die Werte für Abrieb und Druckfestigkeit wurden an Granalien der Fraktion 2,5 bis 3,15 mm gemessen.

Die Restfeuchte wurde mit dem Halogentrockner Typ HR 73, Fa. Mettler bestimmt.

Die gemessenen Werte wurden direkt nach dem Versuch sowie nach einer Reifezeit, d.h. einer Dauer von 1, 7 und 14 Tagen bestimmt und sind in der folgenden Tabelle 2 gelistet. Während der Reifezeit erfolgte die Lagerung der Proben bei 22°C und 65 % relativer Luftfeuchte. Falls eine Zugabe von Wasser erfolgte, so konnte diese Probe, wie in der Tabelle 2 angegeben, vor dem Pressvorgang (bezeichnet als "unbehandelte Proben") oder zusätzlich nach dem Pressvorgang (bezeichnet als "nachbehandelte Probe") erfolgen. Die Zugabe betrug jeweils rund 2 Gew.-% H₂O. Bei den mit Wasser nachbehandelten Proben wurden diese im nicht getrockneten Zustand untersucht.

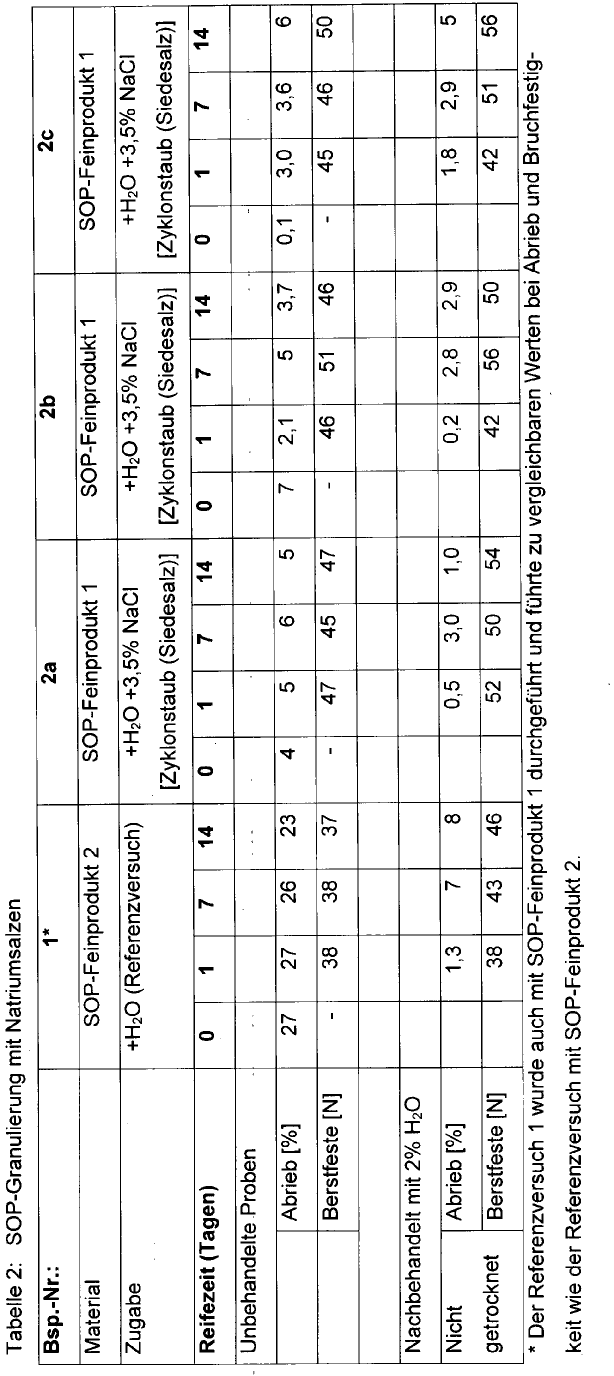

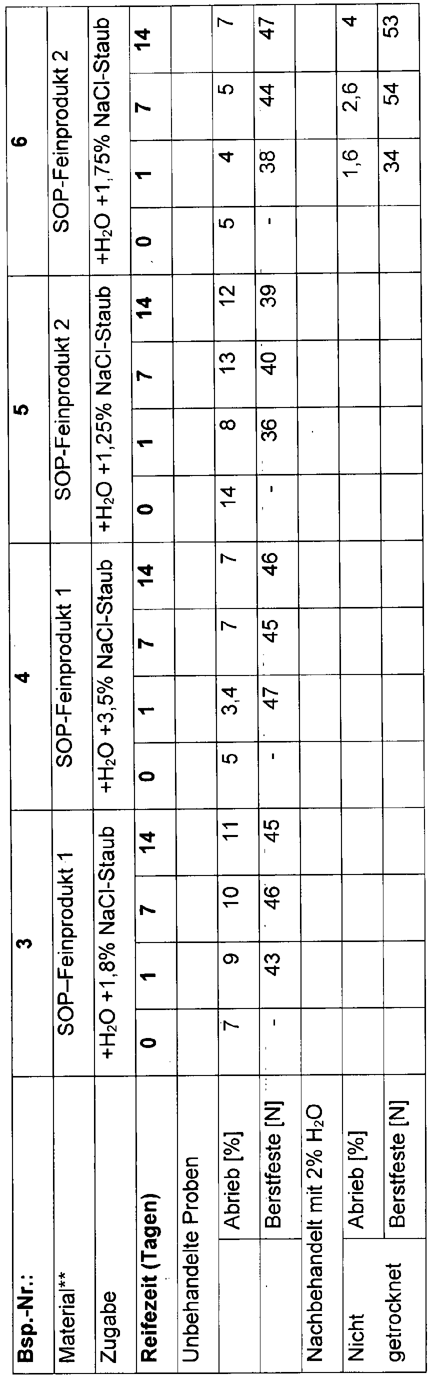

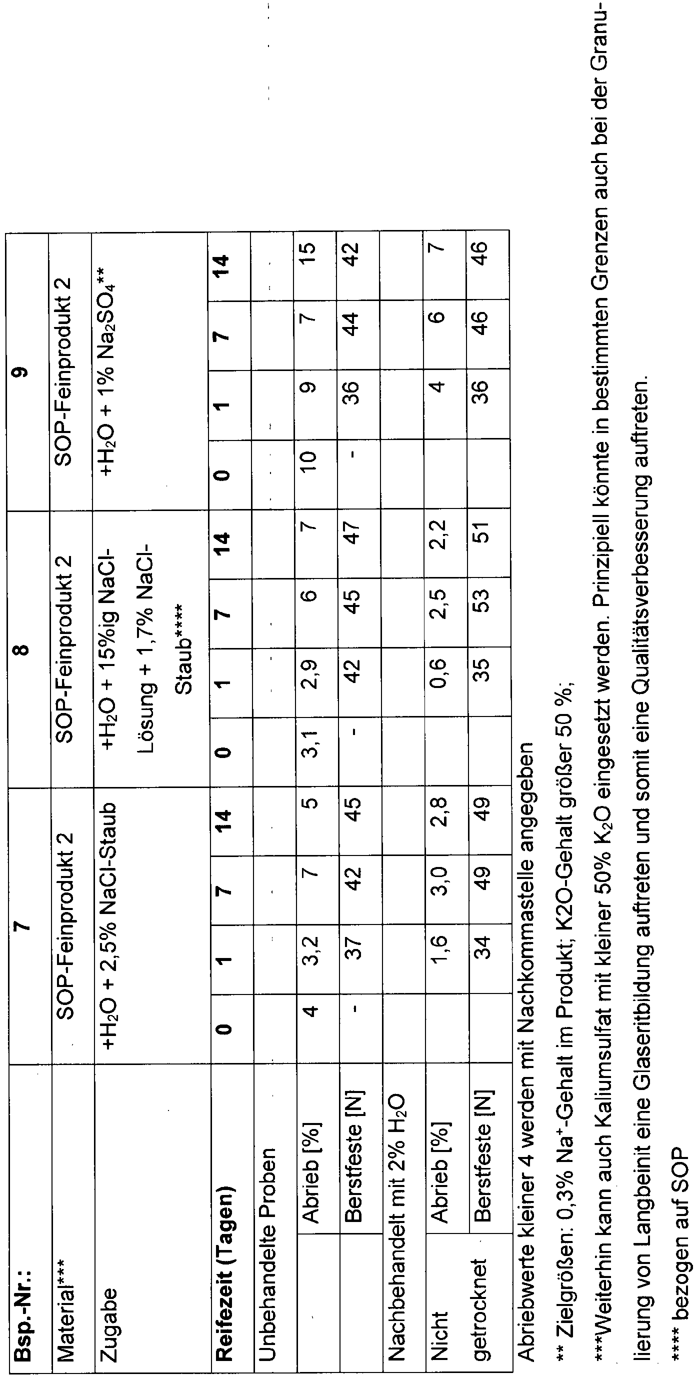

### Beispiel 1 (Referenzversuch 1)

Das Beispiel 1 ist ein Referenzversuch für die Herstellung von Kaliumsulfat-Granulaten, sogenannten SOP-Granulaten, wobei als Kaliumsulfat-Pulver das SOP-Feinprodukt 2 eingesetzt wurde und kein zusätzliches Natriumsalz zudosiert wurde. Das Kaliumsulfat wurde vor dem Pressvorgang in einem Drehrohrofen auf eine Temperatur von 80°C vorgeheizt. Für eine Wasserzugabe vor dem Pressvorgang wurden zwei Gewichtsprozent Wasser bezogen auf die eingesetzte Masse SOP zudosiert. In einer weiteren Versuchsausgestaltung wurden die Proben mit 2% Wasserzugabe nach der Klassierung nachbehandelt und im nicht getrockneten Zustand untersucht.

### Beispiele 2a bis 2c

In den Beispielen 2a bis 2c wurde bei der Herstellung von Kaliumsulfat-Granulat das SOP-Feinprodukt 1 verwendet und Natriumchlorid als Natriumsalz in Form eines Staubes aus einer Kristallisationsanlage (Zyklonstaub) mit der in Tabelle 1 angegebenen Konzentration (3,5 Gew.-%) zudosiert. Im Vergleich zu Beispiel 1 wurden in den Beispielen 2a bis 2c höhere Berstfestigkeitswerte und verbesserte Abriebwerte erzielt (siehe unbehandelte Proben sowie nachbehandelte Proben mit 2 Gew.% Wasser/ 14 Tage Reifezeit).

### Beispiele 3 bis 4

In den Beispielen 3 bis 4 wurde bei der Herstellung von Kaliumsulfat-Granulat das SOP-Feinprodukt 1 verwendet und verschiedene Dosierungen von Natriumchlorid als Natriumsalz in Form eines Staubes eines Steinsalzes wie in der in Tabelle 2 angegeben zugegeben. Mit Zusatz von NaCl und Wasser wurden höhere Berstfestigkeitswerte und verbesserte Abriebwerte erzielt.

### Beispiel 5 bis 7

In den Beispielen 5 bis 7 wurde bei der Herstellung von Kaliumsulfat-Granulat das SOP-Feinprodukt 2 verwendet und verschiedene Dosierungen von Natriumchlorid als Natriumsalz in Form eines Staubes eines Steinsalzes wie in der in Tabelle 2 angegeben zudosiert. Die Ergebnisse aus Beispiel 3 und 4 wurden bestätigt. Mit steigender NaCI-Staubmenge wurden deutlich verbesserte Werte (0 Tage bzw auch für 14 Tage Reifezeit) für den Abrieb erhalten.

### Beispiel 8

### Analog zu den Beispielen 5 bis 7 wurde in Beispiel 8 zusätzlich NaCl in Form einer Lösung zudosiert.

In dieser Reihe (5 bis 8) zeigte sich, dass durch die Zugabe von NaCl in Form einer Lösung vor dem Kompaktieren weiterhin hohe Granulatfestigkeiten erzielt werden konnten. Im direkten Vergleich aller Proben mit Natriumchlorid als Natriumsalz in Form eines Staubes eines Steinsalzes konnten in Beispiel 8 die besten Sofortabriebswerte (0 Tage = 3,1 %) erhalten werden. Auch die Abriebs- und Berstfestigkeitswerte nach 14 Tage Reifezeit sowohl ohne als auch mit Nachbehandlung waren sehr gut.

### Beispiel 9

Im Beispiel 9 wurde bei der Herstellung von Kaliumsulfat-Granulat das SOP-Feinprodukt 2 verwendet und Natriumsulfat als Natriumsalz in Form eines Staubes, wie in Tabelle 2 angegeben, zudosiert. Mit dem Einsatz von Natriumsulfat liegt nur der Abriebwert für das unbehandelte Granulat unter dem Niveau des Referenzversuchs (d.h. ist verbessert), die anderen Werte aber im Bereich bzw. über dem Wert aus dem Vergleichsbeispiel 1.

Zusammenfassend ist aus den in Tabelle 2 aufgeführten Daten zu erkennen, dass die nach dem erfindungsgemäßen Verfahren hergestellten Kaliumsulfat-Granulate mit Zusetzen des Natriumsalzes gegenüber dem Referenzversuch als Beispiel 1 erheblich bessere Bruchfestigkeiten aber auch erheblich verbesserte Abriebfestigkeiten aufweisen. Die hergestellten Kaliumsulfat-Granulate sind somit insgesamt deutlich stabiler und zeichnen sich durch eine hohe mechanische Stabilität sowie geringe Staubbildung, z. B. beim Umladen aus.

Die großtechnische Durchführung mit einer Presswalze mit 1000 mm Arbeitsbreite und einem Durchmesser von 1050 mm bestätigten die guten Ergebnisse. Hierbei wurden mit Na-Gehalten von 0,5 bis max. 1,4, bevorzugt unter 1% (Gewichtsprozent) im Produkt sehr gute Berstfesten (ca. 55 N) erzielt. Beim Abrieb lagen u. a. die Werte des Rohgranulates um rund 50 % niedriger als die Vergleichswerte (Abrieb von 30% auf 15% verringert) - und dies obwohl hier nur festes Natriumchloridsalz verwendet wurde. Die Staubbelastung wurde beim Umschlag reduziert, so dass keine bzw. weniger Staubbindemittel verwendet werden mussten.

Für die Pressagglomeration wurden zusätzliche Versuche auf einer Laborpresse der Fa. Bepex, Typ L200/50 durchgeführt. Auch hier wurden die guten Ergebnisse z.B. mit Natriumchlorid bzw. mit Thenardit (Na₂SO₄) bestätigt.

## Patentansprüche

1. Verfahren zur Herstellung von Kaliumsulfat-Granulaten, **dadurch gekennzeichnet dass** dem Kaliumsulfat während des Granulierens ein Natriumsalz, ausgewählt aus, Natriumchlorid, Natriumsulfat, Natriumsulfat-Hydrate, Natriumhydroxid und deren Mischungen, in einer Menge von 0,1 bis 7,5 Gewichts-%, jeweils bezogen auf das eingesetzte Kaliumsulfat, zugesetzt wird, wobei das Natriumsalz in Form eines Staubs mit einer maximalen Partikelgröße von 200 µm oder in Form einer wässrigen Lösung zugesetzt wird oder wobei ein Teil des Natriumsalzes in Form eines Staubs mit einer maximalen Partikelgröße von 200 µm und die Restmenge des Natriumsalzes in Form einer wässrigen Lösung zugesetzt wird.

2. Verfahren nach Anspruch 1, wobei das Natriumsalz in Form eines Staubes eine Schüttgutdichte im Bereich von 250 bis 1300 kg/m³ aufweist.

3. Verfahren nach einem der vorhergehenden Ansprüche, wobei das Natriumsalz Natriumchlorid ist.

4. Verfahren nach einem der vorhergehenden Ansprüche, wobei die Menge an zugesetztem Wasser vor oder während des Pressvorgangs im Bereich von 0,1 bis 2,5 Gew.%, vorzugsweise im Bereich von 0,1 bis 1,5 Gew.%, besonders bevorzugt im Bereich von 0,3 bis 1,2 Gew.% und/oder nach dem Pressvorgang im Bereich von 0,1 bis 2,5 Gew.%, vorzugsweise im Bereich von 0,1 bis 1,5 Gew.%, besonders bevorzugt im Bereich von 0,1 bis 1,2 Gew.% und die gesamte Menge an zugesetztem Wasser maximal 3,5 Gew.%, jeweils bezogen auf wasserfreies Kaliumsulfat ist.

5. Verfahren nach einem der vorhergehenden Ansprüche, wobei die Kompaktierung als Pressagglomeration durchgeführt wird.

6. Verfahren nach Anspruch 5, wobei die Pressagglomeration ein Kompaktieren des Gemisches aus Kaliumsulfat, Natriumsalz und Wasser mit einer Walzenpresse umfasst.

7. Verfahren nach Anspruch 6, wobei die Pressagglomeration ein Kompaktieren des Gemischs aus Kaliumsulfat, Natriumsalz und Wasser mit einer Walzenpresse bei einer spezifischen Linienkraft im Bereich von 30 bis 100 kN/cm, vorzugsweise im Bereich von 40 bis 80 kN/cm, besonderst bevorzugt im Bereich von 45 bis 75 kN/cm, bezogen auf 1000 mm Walzendurchmesser und eine mittlere Schülpendicke von 10 mm umfasst.

8. Verfahren nach Anspruch 6 oder 7, wobei das Kompaktieren des Gemischs aus Kaliumsulfat, Natriumsalz und Wasser mit einer Walzenpresse durchgeführt wird und eine anschließende Zerkleinerung und Klassierung der beim Kompaktieren erhaltenen Schülpen umfasst.

9. Verfahren nach einem der vorhergehenden Ansprüche, wobei die Schülpen nach dem Pressvorgang, insbesondere während der Zerkleinerung und/oder Klassierung mit Wasser befeuchtet werden.

10. Verfahren nach einem der vorhergehenden Ansprüche, wobei das Granulieren bei einer Temperatur im Bereich von 20 bis 100 °C durchgeführt wird.

11. Kaliumsulfat-Granulat, erhältlich durch ein Verfahren nach einem der vorhergehenden Ansprüche mit einem Natriumsalz-Gehalt im Bereich von 1,8 bis 4,0 Gew%, vorzugsweise 2,5 bis 3,5 Gew%, gerechnet als Gewichtsanteil des eingesetzten Natriumsalzes jeweils bezogen auf das eingesetzte Kaliumsulfat.

12. Verwendung von Natriumsalzen, ausgewählt unter Natriumchlorid, Natriumsulfat, Natriumsulfat-Hydraten, Natriumhydroxid und deren Mischungen zur Verbesserung der mechanischen Eigenschaften von Kaliumsulfat-Granulaten gemäß Anspruch 11, insbesondere zur Erhöhung der Berstfestigkeit und/oder zur Erhöhung der Abriebfestigkeit.

13. Verwendung von Glaserit als Bindemittel in Kaliumsulfat-Granulaten gemäß Anspruch 11.

## Claims

1. Process for producing potassium sulfate granules, **characterized in that** the potassium sulfate is admixed during the granulating with a sodium salt selected from sodium chloride, sodium sulfate, sodium sulfate hydrates, sodium hydroxide and mixtures thereof in an amount of 0.1% to 7.5% by weight, based in each case on the potassium sulfate used, wherein the sodium salt is added in the form of a dust having a maximum particle size of 200 µm or in the form of an aqueous solution or wherein a portion of the sodium salt is added in the form of a dust having a maximum particle size of 200 µm and the remainder of the sodium salt in the form of an aqueous solution.

2. Process according to Claim 1, wherein the sodium sulfate in the form of a dust has a bulk density in the range from 250 to 1300 kg/m³.

3. Process according to either of the preceding claims, wherein the sodium salt is sodium chloride.

4. Process according to any of the preceding claims, wherein the amount of water added before or during the pressing operation is in the range from 0.1% to 2.5% by weight, preferably in the range from 0.1% to 1.5% by weight, more preferably in the range from 0.3% to 1.2% by weight, and/or after the pressing operation is in the range from 0.1% to 2.5% by weight, preferably in the range from 0.1 to 1.5% by weight, more preferably in the range from 0.1% to 1.2% by weight, and the total amount of water added is not more than 3.5% by weight, based in each case on anhydrous potassium sulfate.

5. Process according to any of the preceding claims, wherein the compacting is conducted as a compression agglomeration.

6. Process according to Claim 5, wherein the compression agglomeration comprises compacting the mixture of potassium sulfate, sodium salt and water with a roll press.

7. Process according to Claim 6, wherein the compression agglomeration comprises compacting the mixture of potassium sulfate, sodium salt and water with a roll press at a specific linear force in the range from 30 to 100 kN/cm, preferably in the range from 40 to 80 kN/cm, more preferably in the range from 45 to 75 kN/cm, based on roll diameter 1000 mm and an average slug thickness of 10 mm.

8. Process according to Claim 6 or 7, wherein the compacting of the mixture of potassium sulfate, sodium salt and water is performed with a roll press and comprises a subsequent comminution and classification of the slugs obtained in the compacting.

9. Process according to any of the preceding claims, wherein the slugs are moistened with water after the pressing operation, especially during the comminution and/or classification.

10. Process according to any of the preceding claims, wherein the granulating is performed at a temperature in the range from 20 to 100°C.

11. Potassium sulfate granules obtainable by a process according to any of the preceding claims and having a sodium salt content in the range from 1.8% to 4.0% by weight, preferably 2.5% to 3.5% by weight, calculated as the proportion by weight of the sodium salt used, based in each case on the sodium sulfate used.

12. Use of sodium salts selected from sodium chloride, sodium sulfate, sodium sulfate hydrates, sodium hydroxide and mixtures thereof for improving the mechanical properties of potassium sulfate granules according to Claim 11, especially for increasing cracking resistance and/or for increasing abrasion resistance.

13. Use of glaserite as binder in potassium sulfate granules according to Claim 11.

## Revendications

1. Procédé de fabrication de granulats de sulfate de potassium, **caractérisé en ce qu'**un sel de sodium, choisi parmi le chlorure de sodium, le sulfate de sodium, les hydrates de sulfate de sodium, l'hydroxyde de sodium et leurs mélanges, est ajouté au sulfate de potassium pendant la granulation en une quantité de 0,1 à 7,5 % en poids, à chaque fois par rapport au sulfate de potassium utilisé, le sel de sodium étant ajouté sous la forme d'une poussière ayant une taille de particule maximale de 200 µm ou sous la forme d'une solution aqueuse, ou une partie du sel de sodium étant ajoutée sous la forme d'une poussière ayant une taille de particule maximale de 200 µm et la quantité restante du sel de sodium étant ajoutée sous la forme d'une solution aqueuse.

2. Procédé selon la revendication 1, dans lequel le sel de sodium sous la forme d'une poussière présente une densité apparente dans la plage allant de 250 à 1 300 kg/m³.

3. Procédé selon l'une quelconque des revendications précédentes, dans lequel le sel de sodium est le chlorure de sodium.

4. Procédé selon l'une quelconque des revendications précédentes, dans lequel la quantité d'eau ajoutée avant ou pendant le processus de compression se situe dans la plage allant de 0,1 à 2,5 % en poids, de préférence dans la plage allant de 0,1 à 1,5 % en poids, de manière particulièrement préférée dans la plage allant de 0,3 à 1,2 % en poids, et/ou après le processus de compression dans la plage allant de 0,1 à 2,5 % en poids, de préférence dans la plage allant de 0,1 à 1,5 % en poids, de manière particulièrement préférée dans la plage allant de 0,1 à 1,2 % en poids, et la quantité totale d'eau ajoutée est d'au plus 3,5 % en poids, à chaque fois par rapport au sulfate de potassium anhydre.

5. Procédé selon l'une quelconque des revendications précédentes, dans lequel le compactage est réalisé sous la forme d'une agglomération par compression.

6. Procédé selon la revendication 5, dans lequel l'agglomération par compression comprend un compactage du mélange du sulfate de potassium, du sel de sodium et de l'eau avec une presse à cylindre.

7. Procédé selon la revendication 6, dans lequel l'agglomération par compression comprend un compactage du mélange du sulfate de potassium, du sel de sodium et de l'eau avec une presse à cylindre à une force linéaire spécifique dans la plage allant de 30 à 100 kN/cm, de préférence dans la plage allant de 40 à 80 kN/cm, de manière préférée entre toutes dans la plage allant de 45 à 75 kN/cm, par rapport à un diamètre de cylindre de 1 000 mm et une épaisseur d'écaille moyenne de 10 mm.

8. Procédé selon la revendication 6 ou 7, dans lequel le compactage du mélange du sulfate de potassium, du sel de sodium et de l'eau est réalisé avec une presse à cylindre, et comprend un broyage et une classification ultérieurs des écailles obtenues lors du compactage.

9. Procédé selon l'une quelconque des revendications précédentes, dans lequel les écailles sont humidifiées avec de l'eau après le processus de compression, notamment pendant le broyage et/ou la classification.

10. Procédé selon l'une quelconque des revendications précédentes, dans lequel la granulation est réalisée à une température dans la plage allant de 20 à 100 °C.

11. Granulat de sulfate de potassium, pouvant être obtenu par un procédé selon l'une quelconque des revendications précédentes, ayant une teneur en sel de sodium dans la plage allant de 1,8 à 4,0 % en poids, de préférence de 2,5 à 3,5 % en poids, calculée en tant que proportion en poids du sel de sodium utilisé, à chaque fois par rapport au sulfate de potassium utilisé.

12. Utilisation de sels de sodium, choisis parmi le chlorure de sodium, le sulfate de sodium, les hydrates de sulfate de sodium, l'hydroxyde de sodium et leurs mélanges, pour améliorer les propriétés mécaniques de granulats de sulfate de potassium selon la revendication 11, notamment pour augmenter la résistance à l'éclatement et/ou pour augmenter la résistance à l'abrasion.

13. Utilisation de glasérite en tant que liant dans des granulats de sulfate de potassium selon la revendication 11.
